# EUROPEAN PATENT APPLICATION

(11) **EP 1 983 789 A1**
(43) Date of publication of application: **22.10.2008**
(21) Application number: 07106355.6
(22) Date of filing: 17.04.2007
(51) Int. Cl.: H04Q 7/38

(54) **Service redirection in evolved communication systems**

(71) Applicant: Nokia Siemens Networks Oy, 02610 Espoo (FI)
(72) Inventor: Ore, Ivan, 03100 Nummela (FI)
(74) Representative: TBK-Patent

(57) **Abstract**

A service request which is received from a first core network and is forwarded to a user equipment can be redirected to a second core network. In this case, an indication of the redirection is transmitted to the user equipment, the first core network and the second core network. Moreover, when the service request is to be redirected to another serving system, signaling between the first core network and a serving system from which the service request has been received is performed.

## Description

### FIELD OF THE INVENTION

The present invention relates to mobility procedures in evolved communication systems such as SAE (System Architecture Evolution) architecture. In particular, the present invention relates to service redirection in evolved communication systems.

### BACKGROUND OF THE INVENTION

Service redirection refers to a situation where a network commands a terminal to move to another system. This can be done in dedicated mode via handovers. However, handover requires significant signaling, specially if the redirection is to be done to another inter-RAT (Radio Access Technology) system. For this reason, redirection should preferably be carried out during idle to dedicated transition where the terminal is commanded to the network to another system via RRC (Radio Resource Control) signaling. As the user plane has not been yet established, handover is not used but the terminal is free to move to another system and start the call establishment procedures again. Naturally there is some impact on the call setup time as the user will see some delays for the establishment of the call. However, this is still a good solution in terms of cost for the operators.

In 3GPP (Third Generation Partnership Project) networks, redirection is limited to mobile originated calls.

Redirection for mobile terminated calls are not supported due to lack of core network (CN) procedures.

In SAE architecture, there is no system level procedures about redirecting a call during idle to dedicated transition, as the service enabling capabilities are given to a third party (e.g. IMS (IP Multimedia Subsystem)).

### SUMMARY OF THE INVENTION

According to the present invention, methods and devices of an evolved communication system are provided which overcome the above drawbacks.

The devices and methods of the present invention are defined in the appended claims. The invention may also be implemented as a computer program product.

Redirection during call establishment may be used for load balancing and redirection of certain services that cannot be supported in a current network. With redirection, there is no need to consume dedicated resources unnecessarily, redirection implies simpler procedures (less signalling load) than in the handover case and does not cause service breaks for the incoming calls.

According to an embodiment of the present invention, a redirection procedure for MTC (Mobile Terminated Call) calls in SAE during idle to dedicated transition is proposed.

Moreover, according to an embodiment of the invention, a low-cost way of VoIP (Voice over Internet Protocol) continuation to CS (Circuit Switched) domain is presented.

In addition, according to an embodiment of the invention, signaling mechanisms between SAE and a service enabler, e.g. IMS, are presented so that SAE coordinates with the service enabler whenever redirection is needed.

The present invention improves the mobility capabilities between 3GPP systems in SAE and enables some functionalities in IMS that cannot be done without proper coordination with SAE (e.g. IMS redirection).

Furthermore, the present invention enables voice continuation from LTE to legacy CS networks without the need to invest in extra-elements or features in the core network and radio network (e.g. DTM (Dual Transfer Mode), PS (Packet Switched) handover in GERAN (GSM (Global System for Mobile communications) Edge Radio Access Network). If the voice is redirected to CS domain during call establishment the cost of implementing this solution inside SAE only requires small software upgrades.

The redirection during call establishment allows users to have additional delay in the call setup but this approach is better than allowing redirection during dedicated mode without DTM and PS handover in GERAN case (if DTM and PS handover is not supported by the operator, the service interruption will be on the order of few seconds).

The present invention also allows other non-IMS solutions to support redirection capabilities as IMS does.

Moreover, the present invention allows load balancing mechanisms in EUTRAN (Evolved UMTS (Universal Mobile Telecommunications System) Terrestrial Radio Access Network) for MTC calls.

According to an embodiment of the invention, subscribers should be moved to legacy networks or LTE network whenever a voice call is requested. However, an operator can enable this feature only in areas where the required investment is not justified. In areas where LTE and UTRAN are overlapped, redirection can be disabled (yet, it could be enabled for load reasons). In areas where LTE and GERAN are only existing, the operator may consider using the mechanisms of the invention instead of investing in GERAN features such as DTM and handover.

For the purpose of the present invention to be described herein below, it should be noted that
- a user equipment may for example be any device by means of which a user may access a communication network;
- a user equipment can act as a client entity or as a server entity in terms of the present invention, or may even have both functionalities integrated therein;
- method steps likely to be implemented as software code portions and being run using a processor at one of devices are software code independent and can be specified using any known or future developed programming language;
- method steps and/or devices likely to be implemented as hardware components at one of the devices are hardware independent and can be implemented using any known or future developed hardware technology or any hybrids of these, such as MOS, CMOS, BiCMOS, ECL, TTL, etc, using for example ASIC components or DSP components, as an example;
- generally, any method step is suitable to be implemented as software or by hardware without changing the idea of the present invention;
- devices can be implemented as individual devices, but this does not exclude that they are implemented in a distributed fashion throughout the system, as long as the functionality of the device is preserved.

### BRIEF DESCRIPTION OF THE DRAWINGS

Fig. 1 shows a schematic block diagram illustrating an SAE architecture.
Fig. 2 shows a signaling diagram illustrating redirection to PS domain for an MTC call according to an embodiment of the invention.
Fig. 3 shows a signaling diagram illustrating redirection to CS domain according to an embodiment of the invention.
Fig. 4 shows a schematic block diagram illustrating structures of devices of a communication system according to an embodiment of the invention.

### DESCRIPTION OF THE PREFERRED EMBODIMENTS

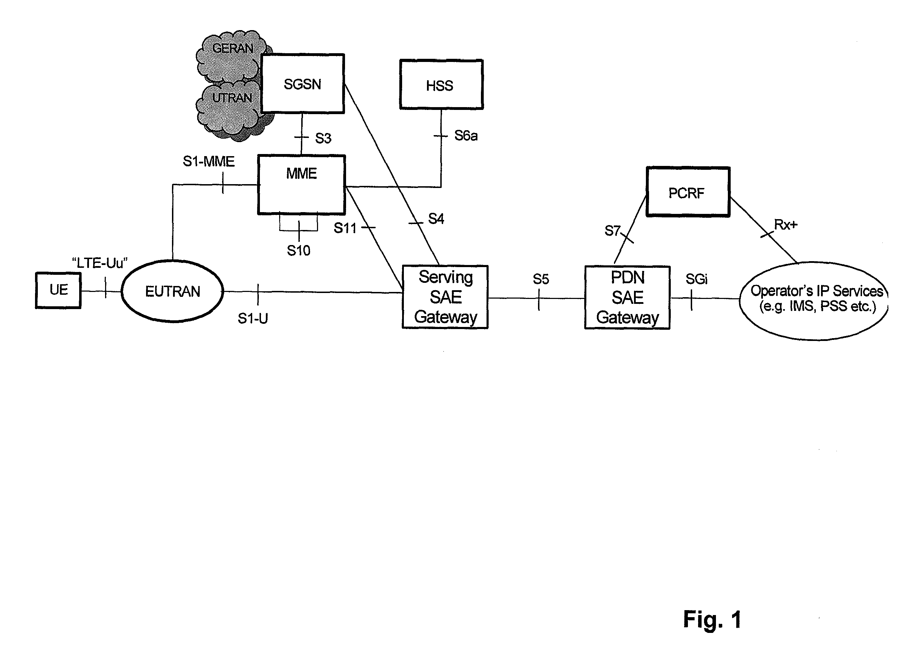

Fig. 1 shows a schematic block diagram illustrating the SAE architecture which is adopted in an embodiment of the invention.

A user equipment UE is connected to EUTRAN via LTE-Uu interface. The EUTRAN is connected with a serving SAE gateway via S1-U interface, which in turn is connected to a PDN (Packet Data Network) SAE gateway via S5 interface. The serving SAE gateway and the PDN SAE gateway may be referred to as EPC (Evolved Packet Network).

The PDN SAE gateway is connected to a system providing IP services, such as IMS, PSS (Packet Switched Service), etc., via SGi interface, and a PCRF (Policy and Charging Rules Function) via S7 interface.

The serving SAE gateway is connected to an SGSN (Serving GPRS (General Packet Radio Service) Support Node) via S4 interface, and an MME (Mobility Management Entity) via S11 interface. The SGSN is part of a core network for GERAN and UTRAN. The MME is connected to the SGSN via S3 interface, an HSS (Home Subscriber Server) via S6a interface, and the EUTRAN via S1-MME interface. S10 is a Reference point between MMEs for MME relocation and MME to MME information transfer.

As shown in Fig. 1, the evolved (EUTRAN) and legacy networks (GERAN/UTRAN) share the same EPC and also same service enabler (e.g. IMS). For CS services in GERAN/UTRAN, UE connects to the CS network (MSC).

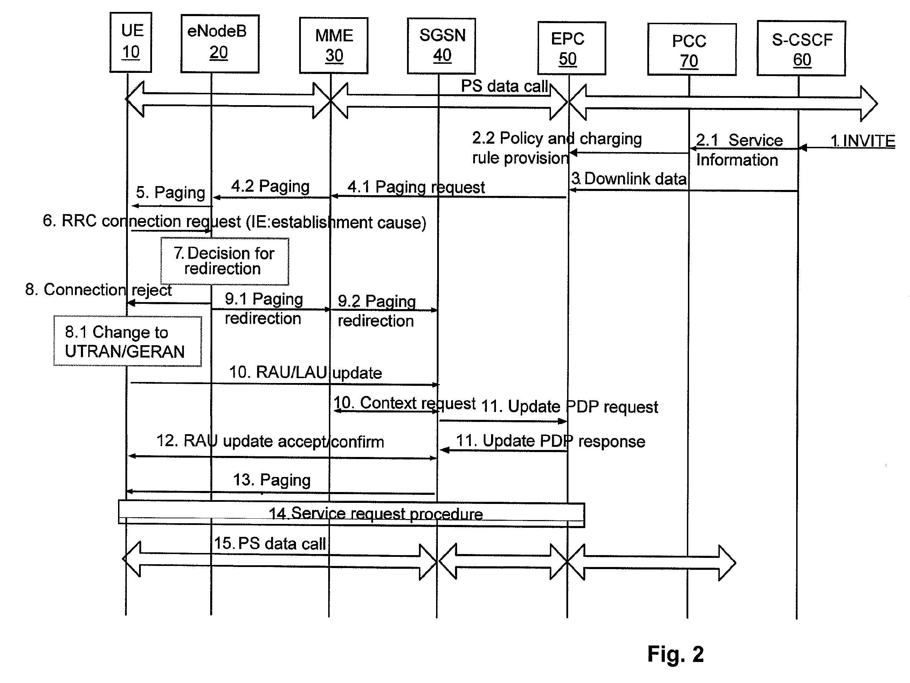

Fig. 2 shows a procedure for redirecting MTC calls to a PS domain from another system inside SAE according to an embodiment of the invention. In the case shown in Fig. 2, a PS call is redirected from LTE to UTRAN/GERAN PS. Redirection is not limited to UTRAN/GERAN. Similar procedures can also be included for redirection from LTE to another LTE system.

Fig. 2 shows communications between a user equipment UE 10, an eNodeB 20 of a radio access network, an MME 30 of a core network associated with the radio access network, an SGSN 40 of another core network, an EPC 50 acting as an interface between the core networks and a serving system such as IMS, an S-CSCF (Serving Call State Control Function) 60 of the serving system and a PCC (Policy Charging Control) 70.

In step 1 in Fig. 2 an INVITE message arrives at the S-CSCF 60.

In step 2.1 in Fig. 2, SDP (Service Data Point) information is sent to the PCC 70. The relevant information needed, i.e. SDP, is already included in this message. In step 2.2 in Fig. 2, the PCC 70 forwards to the EPC 50 the SDP information, part of it or instead, an indicator based on a mapping table to SDP delivered as one indicator "service information". Alternatively, the SDP or part of that information or even the INVITE message itself can be delivered to EPC. The target is that SAE is able to recognize the type of service being requested during the idle to dedicated transition.

At the same time, in step 3 in Fig. 2, the IMS (S-CSCF 60) forwards downlink data to the EPC 50.

In step 4.1 in Fig. 2, based on the service information and downlink data received, the EPC 50 forwards a paging request to the MME 30, including the service information.

In step 4.2 in Fig. 2, the MME 30 forwards the paging to the eNodeB 20. The appropriate paging signaling will be specified once it is defined where the idle mode termination will be (FFS).

In other words, first, information of the service being requested is transferred from the service enabler (IMS or another element) to the eNodeB 20. The ENodeB 20 receives this information together with the paging request. Both, the service information and paging message can be sent to EUTRAN, which the eNodeB 20 belongs to, in the same message or separately.

In steps 5 and 6 in Fig. 2, paging is performed by the eNodeB 20. The eNodeB 20 is aware of the service being requested to the UE 10. The paging request may be forwarded to the UE 10 together with the service information. If similar legacy procedures are applied, the service information will be sent to the UE 10 and the UE 10 will include this information in an RRC: Connection Request.

In other words, steps 5 and 6 may be part of redirection procedures for MOC (Mobile Originated Call) calls performed in legacy network.

According to step 7 in Fig. 2, the eNodeB 20 is configured to use redirection for certain services to PS domain of other systems, e.g. service based redirection for voice or redirection due to load reasons.

In step 8 in Fig. 2, the eNodeB 20 communicates a redirection decision and a target network to the UE 10. The target network may be selected based on measurements or based on a configuration by the operator. In case of voice, the eNodeB 20 may instruct the UE 10 of a preferred domain for a voice call in the target network or this may be decided in the target network. In step 8.1 in Fig. 2, the UE 10 changes to the target network, e.g. UTRAN/GERAN.

In step 9 in Fig. 2, paging redirection is transmitted from the eNodeB 20 to the MME 30 and from the MME 30 forwarded to the SGSN 40. In other words, after the eNodeB 20 has instructed the UE 10 that redirection should be done, the eNodeB 20 sends a paging redirection message to the MME 30. Part of this information contains information of a target system where the UE 10 was redirected. The MME 30 forwards the paging redirection message to the target system (the SGSN 40 in the case shown in Fig. 2) which takes care of the paging to the UE 10.

In steps 10 to 12 in Fig. 2, LAU procedures are performed (combined RAU/TAU procedures could be done if Gs interface is supported).

In steps 13 and 14 in Fig. 2, paging is transmitted to the UE 10 and service request procedures are started.

In step 15 in Fig. 2, PS data bearers are re-established in the target system.

In other words, after the UA 10 was paged successfully, the user plane context is updated between the EPC 50 (which is shared by the LTE network and the legacy network as shown in Fig. 1) and the SGSN 40 in steps 11 in Fig. 2. From that moment on, all data to the UE 10 should be sent via the target system involving the SGSN 40.

The above-described procedures happen independently of the service enabler. In IMS for example, the UE 10 may update its registration after accessing the target system.

Fall back procedures to LTE can happen in case the UE 10 is not able to access the target system. In this case, the UE 10 will attempt to attach to the LTE network again and the MME 30 can cancel the paging redirection to the SGSN 40.

Moreover, idle mode signaling optimisation may be used in steps 10 and 12 in Fig. 2 to reduce signaling load.

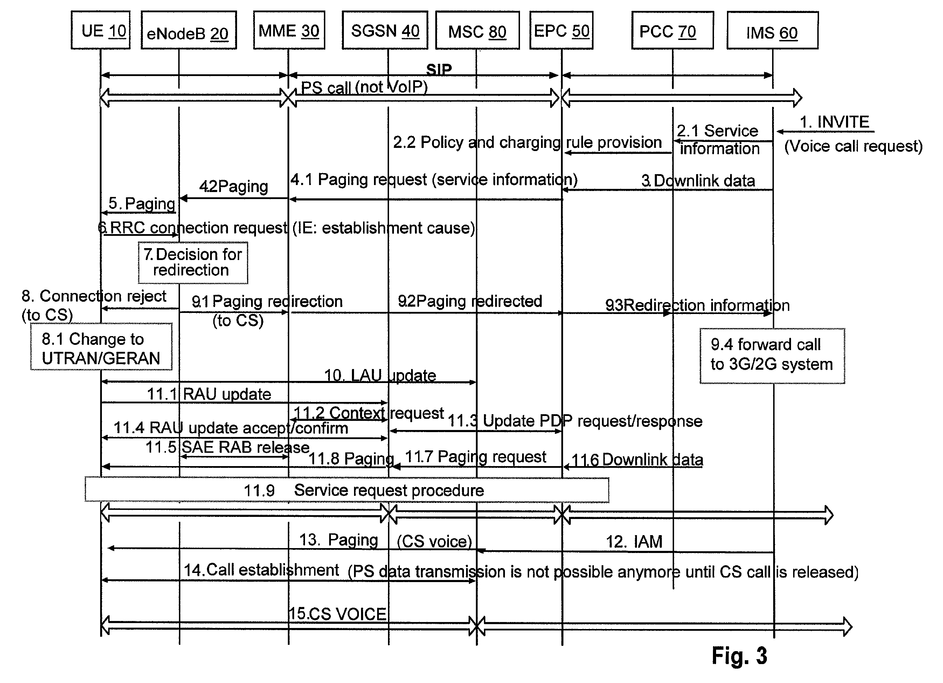

The embodiment shown in Fig. 2 can be used for voice continuation from VoIP LTE to VoIP GERAN or UTRAN. Fig. 3 shows an embodiment for redirecting the VoIP call to CS domain in another system.

Fig. 2 shows communications between a user equipment UE 10, an eNodeB 20 of a radio access network, an MME 30 of a core network associated with the radio access network, an SGSN 40 of another core network, an EPC 50 acting as an interface between the core networks and a serving system such as IMS, an S-CSCF (Serving Call State Control Function) 60 of the serving system and a PCC (Policy Charging Control) 70.

Fig. 3 shows communications between a user equipment UE 10, an eNodeB 20 of a radio access network, an MME 30 of a core network associated with the radio access network, an SGSN 40 of another core network, an EPC 50 acting as an interface between the core networks and a serving system such as an IMS 60, a PCC 70 and an MSC (Mobile Switching Centre) 80.

In step 1 in Fig. 3, an INVITE message arrives at the IMS 60.

In step 2.1 in Fig. 3, SDP information is sent from the IMS 60 to the PCC 70. The relevant information needed, i.e. SDP, is already included in this message. In step 2.2 in Fig. 3, the PCC 70 forwards to the EPC 50 the SDP information, or an indicator of the service type, similar as SQI used for the establishment of QoS bearers but with course resolution, can be used (FFS). The target is that SAE is able to recognize the type of service being requested during the idle to dedicated transition.

At the same time, in step 3 in Fig. 3, the IMS 60 (S-CSCF) forwards downlink data to the EPC 50.

In step 4.1 in Fig. 3, based on the service information and downlink data received, the EPC 50 forwards a paging request to the MME 30, including the service information. In step 4.2 in Fig. 3, the MME 30 forwards the paging request including the service information to the eNodeB 20. The appropriate paging signaling will be specified once it is defined where the idle mode termination will be (FFS).

In steps 5 and 6 in Fig. 3, paging of the UE 10 is performed by the eNodeB 20. The eNodeB 20 is aware of the service being requested to the UE 10. The paging request may be forwarded to the UE together with the service information. If similar legacy procedures are applied, the service information will be sent to the UE 10 and the UE 10 will include this information in an RRC: Connection Request.

According to step 7 in Fig. 3, the eNodeB 20 is configured to use redirection for certain services (e.g. service based redirection for voice or due to load reasons).

In step 8 in Fig. 3, the eNodeB 20 communicates a redirection decision and a target network to the UE 10. The target network may be selected based on measurements or be configured by the operator. In case of voice, the eNodeB 20 may instruct the UE 10 of the preferred domain for the voice call in the target network or this may be decided in the target network. In step 8.1 in Fig. 3, the UE 10 changes to the target network, e.g. UTRAN/GERAN.

In steps 9.1, 9.2, 9.3 and 9.4 in Fig. 3, paging redirection is performed according to the embodiment for redirection of mobile terminated calls. The purpose is to inform the service enabler (e.g. IMS 60) that the call request should be forwarded to another serving system.

In step 10 in Fig. 3, LAU procedures are performed (combined RAU/TAU procedures could be done if Gs interface is supported).

In steps 11.1 to 11.11.9 in Fig. 3, RAU procedure is started and service request may be started if PS is supported in GERAN. However, unless DTM is supported, transmission of PS data will be only possible until the CS voice call is established and reestablishment of PS data transmission will be possible once the CS voice call is released. In step 11.5 in Fig. 3, the SAE bearers in LTE are released upon confirmation from the target network that the redirection procedure was successful.

In step 12 in Fig. 3, the IMS 60 forwards the call request to the MSC 80 by involving an MGCF (Media Gateway Control Function) and BGCF (Breakout Gateway Control Function) (not shown).

In steps 13 to 15 in Fig. 3, the paging request (CS voice call) is transmitted to the UE 10, and the voice call is established.

Until step 7 in Fig. 3, the procedure is similar to that shown in Fig. 2. In step 8 in Fig. 3, the eNodeB 20 informs the UE 10 that it should be redirected to the CS domain. This decision can be part of the eNodeB configuration or subscription information sent from the MME 30 to the eNodeB 20 together with the paging message.

Steps 9.1 to 9.3 are proposed procedures to redirect the paging to the MME 30, the EPC 50 and from there to the IMS (S-CSCF) 60 via the PCC 70. The purpose is to inform the IMS 60 that redirection to the CS domain is requested. The IMS 60 includes procedures for redirection to the CS domain that can be reused in this case.

Based on the IMS procedures, the INVITE message (first message for SIP call establishment) is redirected to the CS domain where the UE 10 will be able to receive after having accessed the CS domain.

Fallback procedures can be included in a similar manner as in the procedure shown in Fig. 2. In this case, if the UE 10 is not able to access the CS domain, it can return to the LTE system where the MME 30 communicates to the EPC 50 and from there to the IMS 60 (or HSS) that the UE 10 is again located in the LTE system.

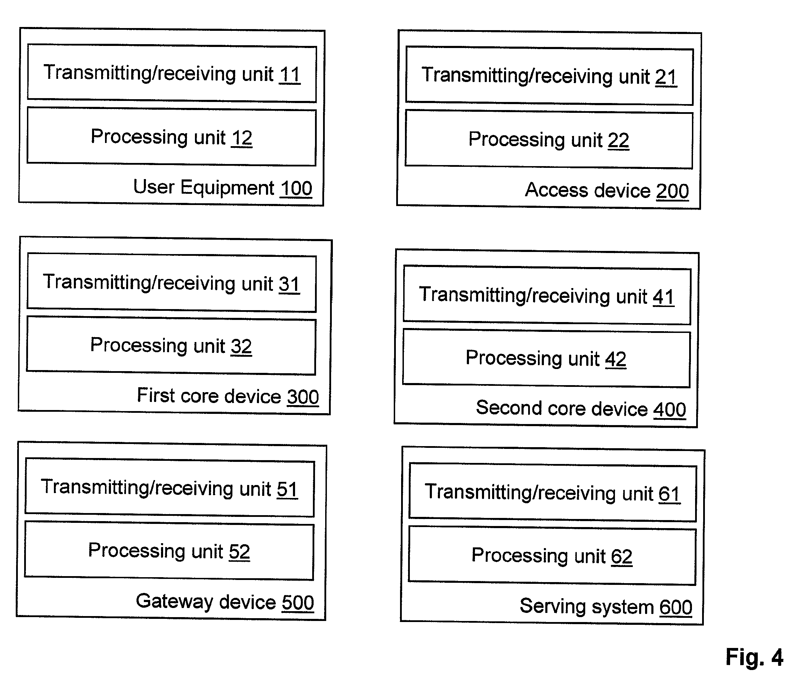

Fig. 4 shows a schematic block diagram illustrating structures of a user equipment 100, such as the UE 10 shown in Figs. 2 and 3, an access device 200, such as the eNodeB 20 shown in Figs. 2 and 3, a first core device 300, such as the MME 30 shown in Figs. 2 and 3, a second core device 400, such as the SGSN 40 shown in Figs. 2 and 3, a gateway device 500, such as the EPC 50 shown in Figs. 2 and 3, and a serving system 600, such as the IMS 60 shown in Figs. 2 and 3, according to an embodiment of the invention.

The user equipment 100 comprises a transmitting/receiving unit 11 and a processing unit 12.

The access device 200 comprises a transmitting/receiving unit 21 and a processing unit 22.

The first core device 300 comprises a transmitting/receiving unit 31 and a processing unit 32.

The second core device 400 comprises a transmitting/receiving unit 41 and a processing unit 42.

The gateway device 500 comprises a transmitting/receiving unit 51 and a processing unit 52.

The serving system 600 comprises a transmitting/receiving unit 61 and a processing unit 62.

A transmitting function and a receiving function of the above transmitting/receiving units may be arranged in separate units.

When the transmitting/receiving unit 21 of the access device 200 receives a service request from a first core network, e.g. the first core device 300 (e.g. steps 4.2 in Figs. 2 and 3), the processing unit 22 processes the service request and the transmitting/receiving unit 21 forwards the service request to the user equipment 100 (e.g. step 5 in Figs. 2 and 3). When the processing unit 22 decides redirection of the service request to a second core network, e.g. the second core device 400 (e.g. step 7 in Figs. 2 and 3), it causes the transmitting/receiving unit 21 to transmit an indication of the redirection to the user equipment 100 (e.g. step 8 in Figs. 2 and 3) and the first core network (e.g. step 9.1 in Figs. 2 and 3).

The processing unit 22 may decide the redirection when a connection request has been received from the user equipment 100 upon the service request forwarded to the user equipment 100. Moreover, the processing unit 22 may decide the redirection based on information included in the service request.

The processing unit 22 may select the second core network based on measurements or based on a pre-configuration.

In case the processing unit 22 determines that the redirection involves a change of a serving system from which the first core network received the service request, it causes the transmitting/receiving unit 21 to transmit an indication of the change to the first core network (e.g. step 9.1 in Fig. 3).

The transmitting/receiving unit 31 of the first core device 300 transmits the service request to an access network, e.g. the access device 200 (e.g. step 4.2 in Figs. 2 and 3). When the transmitting/receiving unit 31 receives the redirection indication from the access network for redirecting the service request the a second core network (e.g. step 9.1 in Figs. 2 and 3), the processing unit 32 processes the redirection indication and causes the transmitting/receiving unit 31 to forward the redirection indication.

The processing unit 32 may cause the transmitting/receiving unit 31 to forward the redirection indication to the second core network (e.g. step 9.2 in Fig. 2).

The transmitting/receiving unit 31 may receive a re-attachment request based on the service request, and the processing unit 32 may cancel the redirection to the second core network based on the re-attachment request.

When the transmitting/receiving unit 31 receives the indication of the change of the serving system from which the first core network received the service request (e.g. step 9.1 in Fig. 3), the processing unit 32 causes the transmitting/receiving unit 31 to forward the indication of the change to a gateway device, e.g. the gateway device 500 (e.g. step 9.2 in Fig. 3), interfacing the first core network to the serving system.

When the transmitting/receiving unit 41 of the second core device 400 receives the indication of the redirection of the service request from the first core network, the processing unit 42 processes the indication for establishing a call with the user equipment 100.

The transmitting/receiving unit 41 may transmit a context update to the gateway device (e.g. step 11 in Fig. 2), the gateway device interfacing to the serving system from which the first core network received the service request.

The processing unit 12 of the user equipment 100 causes the transmitting/receiving unit 11 to transmit a connection request based on the service request received by the transmitting/receiving unit 11 from the first access network associated with the first core network. When the transmitting/receiving unit 11 receives the indication of the redirection of the service request to the second core network in response to the connection request, the processing unit 12 changes the first access network to a second access network associated with the second core network.

The processing unit 12 may cause the transmitting/receiving unit 11 to transmit a re-attachment request to the first access network in case the second access network cannot be attached.

The indication may comprise information on the change of the serving system from which the first core network received the service request, and the processing unit 12 may change the first access network to the second access network based on the information.

When the transmitting/receiving unit 51 of the gateway device 500 receives the indication of the change of the serving system from which the service request was received (e.g. step 9.2 in Fig. 3), the processing unit 52 processes the indication and causes the transmitting/receiving unit 51 to transmit the processed indication to the serving system, wherein the processed indication informs the serving system that the service request is to be directed to another serving system.

The transmitting/receiving unit 51 may receive the above-described re-attachment request based on the service request, and the processing unit 52 may cancel the redirection to the another serving system based on the re-attachment request.

When the transmitting/receiving unit 61 of the serving system 600 receives the redirection information, the processing unit 62 determines from the redirection information that the service request which was transmitted by the serving system is to be directed to another (second) serving system and causes the transmitting/receiving unit 61 to transmit the service request to the second serving system.

The transmitting/receiving unit 61 may receive the above-described re-attachment request based on the service request, and the processing unit 62 may cancel the transmittal of the service request to the second serving system based on the re-attachment request.

It is to be noted that the devices shown in Fig. 4 may have further functionality for working e.g. as user equipment, eNodeB, MME, SGSN, EPC and IMS devices. Here the functions of the devices relevant for understanding the principles of the invention are described using functional blocks. The arrangement of the functional blocks of the devices is not construed to limit the invention, and the functions may be performed by one block or further split into sub-blocks.

According to an embodiment of the invention, a service request which is received from a first core network and is forwarded to a user equipment can be redirected to a second core network. In this case, an indication of the redirection is transmitted to the user equipment, the first core network and the second core network. Moreover, when the service request is to be redirected to another serving system, signaling between the first core network and a serving system from which the service request has been received is performed.

It is to be understood that the above description is illustrative of the invention and is not to be construed as limiting the invention. Various modifications and applications may occur to those skilled in the art without departing from the true spirit and scope of the invention as defined by the appended claims.

## Claims

1. A device comprising:
a receiving unit configured to receive a service request from a first core network;
a processing unit configured to process the service request; and
a transmitting unit configured to forward the service request to a user equipment,
wherein the processing unit is configured to decide redirection of the service request to a second core network and to cause the transmitting unit to transmit an indication of the redirection to the user equipment and the first core network.

2. The device of claim 1, wherein the processing unit is configured to decide the redirection when a connection request has been received from the user equipment upon the service request forwarded to the user equipment.

3. The device of claim 1 or 2, wherein the processing unit is configured to decide the redirection based on information included in the service request.

4. The device of any one of claims 1 to 3, wherein the processing unit is configured to select the second core network based on measurements or based on a pre-configuration.

5. The device of any one of claims 1 to 4, wherein the processing unit is configured to determine that the redirection involves a change of a serving system from which the first core network received the service request, and to cause the transmitting unit to transmit an indication of the change to the first core network.

6. A device used in a first core network, the device comprising:
a transmitting unit configured to transmit a service request to an access network;
a receiving unit configured to receive a redirection indication from the access network for redirecting the service request to a second core network; and
a processing unit configured to process the redirection indication and cause the transmitting unit to forward the redirection indication.

7. The device of claim 6, wherein the processing unit is configured to cause the transmitting unit to forward the redirection indication to the second core network.

8. The device of claim 6 or 7, wherein
the receiving unit is configured to receive a re-attachment request based on the service request, and
the processing unit is configured to cancel the redirection to the second core network based on the re-attachment request.

9. The device of claim 6, wherein
the receiving unit is configured to receive an indication of a change of a serving system from which the first core network received the service request, and
the processing unit is configured to cause the transmitting unit to forward the indication of the change to a gateway device interfacing the first core network to the serving system.

10. A device used in a second core network, the device comprising:
a receiving unit configured to receive an indication of a redirection of a service request from a first core network; and
a processing unit configured to process the indication for establishing a call with a user equipment.

11. The device of claim 10, comprising:
a transmitting unit configured to transmit a context update to a gateway device, the gateway device interfacing to a serving system from which the first core network received the service request.

12. A device comprising:
a receiving unit;
a processing unit; and
a transmitting unit,
wherein the processing unit is configured to cause the transmitting unit to transmit a connection request based on a service request received by the receiving unit from a first access network associated with a first core network,
wherein when the receiving unit receives an indication of a redirection of the service request to a second core network in response to the connection request, the processing unit is configured to change the first access network to a second access network associated with the second core network.

13. The device of claim 12, wherein the processing unit is configured to cause the transmitting unit to transmit a re-attachment request to the first access network in case the second access network cannot be attached.

14. The device of claim 12 or 13, wherein the indication comprises information on a change of a serving system from which the first core network received the service request, and the processing unit is configured to change the first access network to the second access network based on the information.

15. A device comprising:
a receiving unit configured to receive an indication of a change of a serving system from which a service request was received;
a processing unit configured to process the indication; and
a transmitting unit,
wherein the processing unit is configured to cause the transmitting unit to transmit the processed indication to the serving system, wherein the processed indication informs the serving system that the service request is to be directed to another serving system.

16. The device of claim 15, wherein
the receiving unit is configured to receive a re-attachment request based on the service request, and
the processing unit is configured to cancel the redirection to the another serving system based on the re-attachment request.

17. A device used in a first serving system, the device comprising:
a receiving unit configured to receive redirection information;
a processing unit configured to determine from the redirection information that a service request which was transmitted by the first serving system is to be directed to a second serving system; and
a transmitting unit,
wherein the processing unit is configured to cause the transmitting unit to transmit the service request to the second serving system.

18. The device of claim 17, wherein
the receiving unit is configured to receive a re-attachment request based on the service request, and
the processing unit is configured to cancel the transmittal of the service request to the second serving system based on the re-attachment request.

19. A method comprising:
receiving a service request from a first core network;
processing the service request;
forwarding the service request to a user equipment;
deciding redirection of the service request to a second core network; and
transmitting an indication of the redirection to the user equipment and the first core network.

20. A method used in a first core network, comprising:
transmitting a service request to an access network;
receiving a redirection indication from the access network for redirecting the service request to a second core network;
processing the redirection indication; and
forwarding the redirection indication.

21. A method used in a second core network, comprising:
receiving an indication of a redirection of a service request from a first core network; and
processing the indication for establishing a call with a user equipment.

22. A method comprising:
receiving a service request from a first access network associated with a first core network;
processing the service request;
transmitting a connection request based on the service request;
receiving an indication of a redirection of the service request to a second core network in response to the connection request; and
changing the first access network to a second access network associated with the second core network.

23. A method comprising:
receiving an indication of a change of a serving system from which a service request was received;
processing the indication; and
transmitting the processed indication to the serving system, wherein the processed indication informs the serving system that the service request is to be directed to another serving system.

24. A method used in a first serving system, comprising:
receiving redirection information;
determining from the redirection information that a service request which was transmitted by the first serving system is to be directed to a second serving system; and
transmitting the service request to the second serving system.

25. A computer program product comprising software code for causing a processing device to perform the steps of any one of claims 19 to 24 when the software code is run on the processing device.

26. The computer program product of claim 25, wherein the computer program product comprises a storage medium storing the software code.

27. The computer program product of claim 25, wherein the computer program product comprises a signal carrying the software code, which is loadable into the processing device.
